## Europäisches Patentamt
## European Patent Office
## Office européen des brevets

(19)

(11) Numéro de publication: **0 021 946**
**A1**

## (12) DEMANDE DE BREVET EUROPEEN

(21) Numéro de dépôt: **80400839.9**

(22) Date de dépôt: **10.06.80**

(51) Int. Cl.³: **E 04 H 5/12**
**F 28 C 1/00**

(30) Priorité: **20.06.79 FR 7915763**

(43) Date de publication de la demande:
**07.01.81 Bulletin 81 1**

(84) Etats Contractants Désignés:
**AT BE CH DE GB IT LI LU NL SE**

(71) Demandeur: **COIGNET S.A.**
**9-13 avenue Myron T. Herrick**
**F-75008 Paris(FR)**

(72) Inventeur: **Fougea, Bernard**
**94 boulevard Maurice Barrès**
**F-92200 Neuilly-sur-Seine(FR)**

(74) Mandataire: **CABINET BONNET-THIRION**
**95 Boulevard Beaumarchais**
**F-75003 Paris(FR)**

(54) **Ossature de dispersion de réfrigérants atmosphériques à tirage induit.**

(57) Ossature de dispersion de réfrigérants armosphériques à tirage induit.

L'ossature extérieure de dispersion en forme de couronne, portant une pluralité de secteurs (3) du bassin d'alimentation, séparés par des joints de dilatation (27), est constituée de tours indépendantes (5) en segments de couronne constituées d'éléments rayonnants verticaux (7) encastrés sur des pieux (26) et localement entretoisés dans le sens périmétrique par un contreventement à base de triangles (16). Les éléments rayonnants sont réalisés par empilage de portiques préfabriqués assemblés par collage ou emboîtement.

Application: réfrigérants atmosphériques à tirage induit.

./...

FIG.2

1

## Ossature de dispersion de réfrigérants atmosphériques à tirage induit

La présente invention a pour objet un perfectionnement apporté à l'ossature de dispersion de réfrigérants atmosphériques à tirage induit.

On rappellera qu'un tel réfrigérant est essentiellement constitué par un groupe central de ventilation qu'entoure une ossature de dispersion portant le bassin d'alimentation, ces deux éléments étant reliés par une toiture de raccordement.

L'invention vise à réaliser une telle ossature en béton armé à l'aide d'éléments préfabriqués, standardisés dans toute la mesure du possible, de pallier au problème de la dilatation différentielle et de conférer néanmoins à l'ensemble un monolithisme le rendant apte à supporter les efforts horizontaux engendrés par les séismes.

A cet effet, selon l'invention le réfrigérant atmosphérique à tirage induit du type comportant une ossature extérieure de dispersion en forme de couronne supportant un bassin d'alimentation de même forme et une ossature intérieure concentrique à la première et supportant le groupe de ventilation, ces deux ossatures étant raccordées l'une à l'autre par une toiture, est caractérisé en ce que l'ossature extérieure est réalisée par la disposition en couronne d'une pluralité de tours indépendantes, autostables et équidistantes en forme de segments de couronne, segments dont chacun est constitué par au moins deux éléments rayonnants verticaux, encastrés sur les pieux de fondation et locale-

ment entretoisés dans le sens périmétrique par un contreventement à base d'éléments indépendants de forme générale triangulaire.

Avantageusement, il est prévu l'interposition d'un joint périmétrique entre ladite ossature extérieure et ladite toiture de raccordement.

Selon une première caractéristique de l'invention, chacun desdits éléments rayonnants verticaux est constitué par l'empilage d'une pluralité de portiques préfabriqués à entr' axe angulaire uniforme, chaque portique comportant deux poteaux, l'un intérieur, l'autre extérieur par rapport à l'axe vertical de l'ossature, que relie une traverse de tête qui se prolonge vers l'extérieur en une console supérieure porte-persienne.

L'assemblage desdits éléments rayonnants verticaux peut avoir lieu soit par collage, soit par emboîtement ; dans le premier cas, on procède par pose sur bain de résine ou de matière plastique sans retrait.

Selon une technique connue en soi, ces éléments rayonnants sont coulés à joints conjugués. L'homme de l'art appréciera que grâce à leur conception selon l'invention et au dimensionnement convenable, ces éléments empilés demeurent autostables quelles que soient les surcharges appliquées ; de ce fait, il n'est pas nécessaire de créer des liaisons résistant à la traction entre portiques.

Ces caractéristiques font ressortir, d'une part, l'application poussée de la préfabrication et, d'autre part, la simplification d'assemblage, en évitant le coulage en place de joints en béton armé de petites dimensions.

Selon une autre caractéristique de l'invention, lesdits triangles de contreventement relient entre eux, dans chacune desdites tours indépendantes, sur les périmètres extérieur et intérieur ainsi qu'au niveau de chacun des portiques empilés, les éléments rayonnants définissant ladite tour, les triangles étant associés par l'un des côtés de l'angle droit, de longueur appropriée, au poteau d'un portique, l'autre formant entretoise entre lesdits éléments rayonnants au niveau des traverses des portiques correspondants, et les triangles reliant les portiques des divers niveaux superposés étant disposés de telle sorte que leurs hypoténuses forment successivement les diagonales opposées des rectangles dont la hauteur est celle d'un portique et la largeur l'écartement, à l'extérieur respectivement à l'intérieur, entre les éléments rayonnants de ladite tour.

Préférentiellement, tous les éléments de contreventement et d'entretoisement sont préfabriqués et assemblés par boulonnage aux poteaux des portiques associés lesquels comportent à cet effet des repos profilés, et ont une section transversale adaptée à permettre leur raccordement, en vue de la continuité des armatures, avec les éléments associés des portiques, par coulage en place d'une jonction, notamment en béton armé.

Cette disposition selon l'invention est caractérisée par une triangulation entièrement préfabriquée et vise à éviter le flambement des poteaux des portiques ; la liaison entre hypoténuses des triangles rectangles assure le passage dans la structure des tractions et des compressions qui y sont engendrées.

En ce qui concerne le bassin d'alimentation, l'une de ses caractéristiques réside dans le fait qu'il est constitué par une pluralité de secteurs indépendants adaptés à coopérer avec les tours indépendantes de l'ossature formant support et séparés entre eux par des joints de dilatation.

Avantageusement, les poutres de l'ossature de dispersion reposent sur les poteaux par l'intermédiaire d'appuis en néoprène d'épaisseur adéquate, de manière à assurer une répartition des effets horizontaux entre les différentes tours.

D'autres caractéristiques et avantages de l'invention ressortiront d'ailleurs de la description qui va suivre, à titre d'exemple non limitatif, d'une forme de réalisation de l'invention en référence aux dessins annexés dans lesquels :

la figure 1 est une vue en plan schématique de l'ensemble du réfrigérant ;

la figure 2 est une vue en élévation et en coupe de deux tours indépendantes voisines de l'ossature extérieure entre deux joints de dilatation ;

BAD ORIGINAL

la figure 3 est une vue en coupe selon III-III de la figure 2 montrant la constitution d'un élément rayonnant d'un bloc indépendant ;

la figure 4 est une vue en coupe agrandie d'un détail de la figure 2 montrant la disposition du joint de dilatation et les appuis en néoprène disposés entre la base des poutres de l'ossature et les poteaux-support ;

la figure 5 est un schéma montrant le système d'appui du bassin sur l'ossature de support.

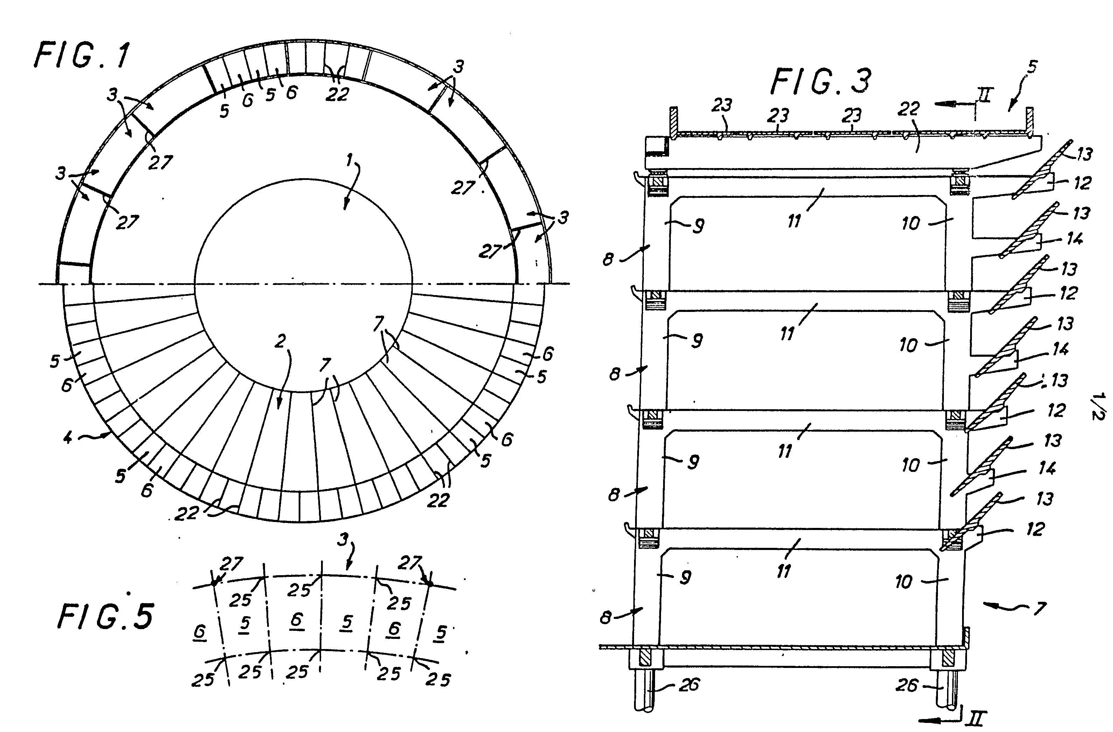

En se reportant tout d'abord à la figure 1, on situera les emplacements des éléments suivants du réfrigérant : en 1, le groupe de ventilation, en 2, la toiture de raccordement représentée par une série de poutres rayonnantes la supportant, en 3, les secteurs du bassin d'alimentation et en 4, l'ossature extérieure de dispersion supportant le bassin.

La description qui va suivre sera, pour des raisons de simplification, limitée aux seuls éléments mettant en évidence les caractéristiques de l'invention ; les détails d'assemblage ou la coopération de certains éléments ressortant à l'état de la technique sont bien connus de l'homme de l'art et ne seront pas traités ci-après.

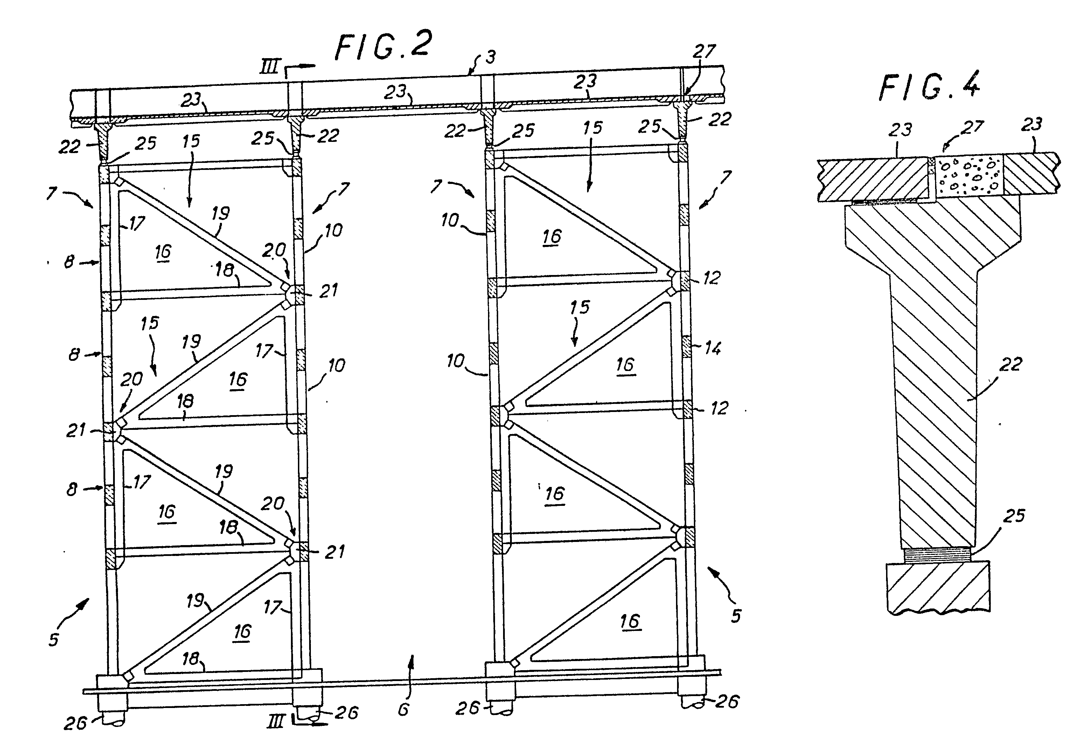

En se référant à l'ensemble des figures 1, 2 et 3, on soulignera que l'ossature de dispersion affecte la forme d'une couronne qui est recoupée en une pluralité de tours indépendantes 5 et de secteurs intermédiaires 6, d'ouverture angulaire égale (figures 1 et 2). Chacune de ces tours 5, encastrée sur sa fondation est, ainsi qu'on le décrira ci-après, autostable par effet de portique dans le sens rayonnant et par effet de triangulation dans le sens périmétrique. Chaque tour indépendante est donc en mesure de parfaitement résister aux séismes.

Entre ces tours indépendantes 5 et la toiture 2, il est prévu un joint de dilatation périmétrique qui n'est pas représenté plus en détail.

L'ossature de chacune des tours indépendantes 5 de la dispersion est à base d'éléments rayonnants 7 (figures 2 et 3) dont chacun est constitué par l'empilage d'une pluralité de portiques préfabriqués 8 à entr'axe angulaire uniforme.

Chacun de ces portiques 8 comporte deux poteaux 9, 10 et une traverse 11 les reliant en tête. Cette traverse 11 se prolonge vers l'extérieur en console 12 destinée à supporter une persienne en béton armé 13. Dans la hauteur des poteaux extérieurs 10, à l'exception de celui du portique inférieur, est greffée une autre console 14 permettant de supporter également une persienne 13.

Les persiennes ainsi prévues sur la hauteur de la dispersion sont démontables et constituées par des plaques posées sur l'extrémité des consoles. Les portiques sont assemblés par collage ou par emboîtement.

La figure 2 représente deux tours indépendantes 5 séparées par un secteur 6 de l'ossature de dispersion. Par 15, on a désigné l'ensemble du système de contreventement extérieur d'une tour 5 ; ce système est à base de triangles rectangles 16 dont un des côtés de l'angle droit 17 est alternativement associé à la face latérale des poteaux 9 (intérieur) et 10 (extérieur) délimitant les portiques de chacune des tours.

L'autre côté 18 de chacun des triangles de contreventement 16 forme entretoise au niveau des traverses 11 des portiques 8.

Du fait de cette disposition, les hypoténuses 19 des triangles 16 forment successivement les diagonales opposées des cadres rectangulaires définis par la hauteur des poteaux 9 et 10 et l'écartement extérieur et intérieur des éléments rayonnants 7, avec création d'un noeud 20. Ainsi qu'on l'a précisé plus haut, cette structure assure le passage des sollicitations en traction ou en compression et crée une structure centrale rigide avec des ailes offrant une certaine mobilité.

Les poteaux 9, 10 des portiques présentent des bossages 21, adaptés à recevoir, pour leur positionnement et leur fixation par boulonnage, les sommets des triangles 16. La section transversale des triangles 16 est d'ailleurs étudiée pour permettre leur raccordement, en vue de la continuité des armatures, avec les éléments associés des portiques 8, par coulage en place d'une jonction par exemple en béton armé ou à l'aide d'un ciment mortier-colle.

On reviendra maintenant à la figure 1 qui montre dans sa partie supérieure le découpage du bassin d'alimentation en une pluralité de secteurs indépendants 3 que séparent des joints de dilatation rayonnants. Chacun de ces secteurs est constitué de poutres rayonnantes 22 (figures 3 et 4) recevant un plancher à dalles nervurées 23. Ces poutres 22 reposent sur l'ossature inférieure par des plots en néoprène 25 (figure 4).

Grâce à ce système, le bassin d'alimentation est complètement désolidarisé de l'ossature inférieure par l'interposition des plots en néoprène 25 précités qui permettent tous les mouvements relatifs nés des différences de dilatation et de retrait entre éléments constitutifs de la structure.

La répartition des épaisseurs des appuis en néoprène permet la transmission et la distribution de sollicitations, liées aux séismes par exemple, du bassin aux éléments rayonnants de l'ossature.

La figure 4 donne des détails d'un joint de dilatation entre deux secteurs adjacents 3 du bassin d'eau chaude.

La figure 5 fait ressortir les appuis du bassin d'eau chaude sur l'ossature inférieure ; en 27, les joints de dilatation entre secteurs du bassin et en 25, les appuis en néoprène de faible épaisseur.

L'ensemble des éléments rayonnants 7 de l'ossature de dispersion est entièrement fondé sur des pieux 26 qui ne sont qu'esquissés sur les dessins.

Bien entendu, la présente invention n'est nullement limitée à la forme de réalisation représentée et décrite mais englobe toutes variations.

1

REVENDICATIONS

1. Réfrigérant atmosphérique à tirage induit du type comportant une ossature extérieure de dispersion (4) en forme de couronne supportant un bassin d'alimentation de même forme et une ossature intérieure (1) concentrique à la première et supportant le groupe de ventilation, ces deux ossatures étant raccordées l'une à l'autre par une toiture (2), caractérisé en ce que l'ossature extérieure (4) est réalisée par la disposition en couronne d'une pluralité de tours indépendantes (5), autostables et équidistantes en forme de segments de couronne, segments dont chacun est constitué par au moins deux éléments rayonnants verticaux (7), encastrés sur les pieux de fondation (26) et localement entretoisés dans le sens périmétrique par un contreventement à base d'éléments indépendants de forme générale triangulaire (16).

2. Réfrigérant selon la revendication 1, caractérisé par l'interposition d'un joint périmétrique entre ladite ossature extérieure (4) et ladite toiture de raccordement (2).

3. Réfrigérant selon la revendication 1, caractérisé en ce que chacun desdits éléments rayonnants verticaux (7) est constitué par l'empilage d'une pluralité de portiques préfabriqués (8) à entr'axe angulaire uniforme, chaque portique comportant deux poteaux, l'un intérieur (9), l'autre extérieur (10) par rapport à l'axe vertical de l'ossature, que relie une traverse de tête (11) qui se prolonge vers l'extérieur en une console supérieure porte-persienne (12).

4. Réfrigérant selon la revendication 3, caractérisé en ce que l'assemblage des portiques constituant lesdits éléments rayonnants a lieu par collage.

5. Réfrigérant selon la revendication 3, caractérisé en ce que l'assemblage des portiques constituant lesdits éléments rayonnants a lieu par emboîtement.

6. Réfrigérant selon la revendication 3, caractérisé en ce que dans la hauteur du poteau extérieur (10) d'au moins l'un des portiques superposés est greffée une console intermédiaire (14) faisant également office de porte-persienne.

7. Réfrigérant selon une quelconque des revendications 3 à 6, caractérisé en ce que lesdites persiennes (13) sont amovibles et constituées par des plaques en béton armé posées sur l'extrémité des consoles (12,14).

8. Réfrigérant selon une quelconque des revendications 1 à 3, caractérisé en ce que lesdits triangles de contreventement périmétrique (16) sont rectangles.

9. Réfrigérant selon la revendication 8, caractérisé en ce que, dans chacun desdits triangles de contreventement (16), l'un des côtés de l'angle droit (17) a une longueur sensiblement égale à celle d'un poteau de portique, l'autre ayant une longueur sensiblement égale à l'écartement, à l'extérieur respectivement à l'intérieur, de deux éléments rayonnants verticaux.

10. Réfrigérant selon la revendication 8 ou 9, caractérisé en ce que tous les éléments de contreventement (16) et d'entretoisement sont préfabriqués et assemblés par boulonnage aux poteaux (9,10) des portiques associés (8), lesquels comportent à cet effet des repos profilés, et en ce que lesdits éléments ont une section transversale adaptée à permettre leur raccordement, en vue de la continuité des armatures, avec les éléments associés des portiques, par coulage en place d'une jonction, notamment en béton armé.

11. Réfrigérant selon la revendication 1, caractérisé en ce que ledit bassin d'alimentation est constitué par une pluralité de secteurs indépendants (3) adaptés à coopérer chacun avec les tours indépendantes (5) de l'ossature formant support et séparés entre eux par des joints de dilatation(27).

12. Réfrigérant selon la revendication 11, caractérisé en ce que chacun desdits secteurs est constitué par une pluralité de poutres rayonnantes (22) adaptées à recevoir un plancher à dalles nervurées (23).

13. Réfrigérant selon la revendication 12, caractérisé en ce que les poutres rayonnantes (22) reposent sur les traverses des portiques inférieurs associés par l'intermédiaire d'appuis en néoprène (25).

FIG.1

FIG.5

FIG.3

0021946

FIG. 4

FIG. 2

Office européen
des brevets

**RAPPORT DE RECHERCHE EUROPEENNE**

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| | FR - A - 2 226 631 (MARLEY COMPANY) <br> * Page 8, ligne 39; page 9, lignes 1-12; page 10, lignes 2-24; figures 5,6,6A * <br><br> -- <br><br> BE - A - 546 863 (DYCKERHOFF & WIDMANN) <br> * Page 1, lignes 8-14; page 2, ligne 1; page 4, lignes 31-32; page 5, lignes 1-3; figure 2 * <br><br> -- <br><br> GB - A - 630 823 (BLAEDEL-WESTER-GAARD) <br> * Page 4, lignes 112-118; figure 5 * <br><br> -- <br><br> DE - A - 2 050 303 (FURLONG) <br> * Page 10, lignes 6-11; figures 1,2,4 * <br><br> ---- | 1,7 <br><br><br><br><br> 1 <br><br><br><br><br><br> 1 <br><br><br><br> 1,7 | E 04 H 5/12 <br> F 28 C 1/00 |

DOMAINES TECHNIQUES RECHERCHES (Int. Cl. ³)

E 04 H
F 28 C

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 02-10-1980 | DALL'ANESE |

OEB Form 1503.1 06.78